# FASCICULE DE BREVET EUROPEEN

(11) **EP 1 741 879 B1**
(45) Date de publication et mention de la délivrance du brevet: **28.01.2009**
(21) Numéro de dépôt: 06076291.1
(22) Date de dépôt: 23.06.2006
(51) Int. Cl.: F01D 9/06, F02K 3/04

(54) **Dispositif de support et de logement de servitudes dans un turboreacteur a double flux**
Vorrichtung zur Abstützung und Einlassung von Röhre und Kabeln in einem Turbotriebwerk
Apparatus for the support and accomodation of tubes and cables in a turboengine

(30) Priorité: 29.06.2005 FR 0506612
(43) Date de publication de la demande: 10.01.2007
(73) Titulaire: SNECMA, 75015 Paris (FR)
(72) Inventeur: Mazeaud, Georges, 91330 Yerres (FR); Yvon, Didier Jean-Louis, 91600 Savigny Sur Orge (FR)
(74) Mandataire: Nguyen, Dominique

(56) Documents cités:
- EP-A- 0 601 864
- US-A- 2 827 760
- US-A- 5 357 744
- US-A1- 2004 111 829

## Description

La présente invention concerne un dispositif de support et de logement de servitudes dans un turboréacteur à double flux, ce dispositif comprenant deux viroles coaxiales disposées l'une à l'intérieur de l'autre et reliées par des bras radiaux tubulaires dans lesquels passent des conduits de fluide et des câbles électriques.

Ce dispositif est monté autour d'un compresseur du turboréacteur, en aval de la soufflante et en amont d'une turbine du turboréacteur, et peut coopérer par sa virole externe avec un inverseur de poussée, monté en aval de ce dispositif.

Les viroles interne et externe du dispositif délimitent entre elles une veine annulaire d'écoulement du flux secondaire qui provient de la soufflante du turboréacteur et qui est notamment destiné au refroidissement de composants du turboréacteur.

Dans la technique connue, les bras radiaux de ce dispositif sont monoblocs et la virole interne comprend des panneaux en portion de cylindre (s'étendant par exemple sur 90°) qui sont fixés par des vis sur une équerre de support et qui peuvent être démontés pour permettre un accès à des équipements installés sur le carter externe du compresseur, pour une opération de maintenance.

L'état de la technique est présente par exemple dans les documents US 2004/0111829 et US 5 357 744.

Cette technique ne permet toutefois pas d'accéder à des équipements situés à l'intérieur de la virole interne et dans l'alignement des bras radiaux et qui sont par exemple du type LRU (de l'anglais Line Replaceable Unit) tels que les vérins de commande du calage angulaire des redresseurs du compresseur, qui doivent être démontables sans démontage des viroles du dispositif de support de servitudes.

L'invention a notamment pour but d'apporter une solution simple, efficace et économique aux problèmes de la technique actuelle.

Elle propose à cet effet un dispositif de support et de logement de servitudes dans un turboréacteur à double flux, comprenant deux viroles coaxiales disposées l'une à l'intérieur de l'autre et reliées par des bras radiaux tubulaires dans lesquels passent des conduits de fluide et des câbles électriques, caractérisé en ce qu'une face latérale d'au moins un bras radial comprend un panneau amovible comportant une partie radiale fixée sur le bras radial et une partie cylindrique de raccordement à la virole interne.

Dans le dispositif selon l'invention, les bras radiaux situés au-dessus des équipements du turboréacteur sujets à des opérations de maintenance, comprennent chacun sur une de leurs faces latérales un panneau amovible qui est fixé par des vis ou analogues sur le bras radial. Les opérations de maintenance des équipements situés dans l'alignement des bras radiaux sont ainsi plus faciles à exécuter et peuvent être effectuées directement sur un turboréacteur monté sous l'aile d'un avion.

La dépose des panneaux amovibles des bras radiaux permet un accès à des équipements du turboréacteur situés radialement à l'intérieur de la virole interne dans l'alignement du bras radial, améliore l'accès et la visibilité des équipements, facilite l'utilisation d'outils pour le démontage et la maintenance de ces équipements, et permet le retrait de certains équipements pour leur remplacement.

Elle permet également d'avoir accès aux câbles électriques et aux conduits de fluide qui passent dans ces bras radiaux. Ces conduits et câbles peuvent ainsi être démontés et remplacés facilement.

De façon pratique, la partie radiale du panneau amovible est posée et fixée le long d'au moins certains de ses bords sur des rebords correspondants du bras radial et la partie cylindrique de ce panneau amovible est posée et fixée le long d'au moins certains de ses bords sur des rebords correspondants de la virole interne.

Dans le cas où un conduit de fluide passe à l'intérieur du bras radial et s'étend circonférentiellement dans la virole interne, la dimension circonférentielle de la partie circonférentielle de ce conduit est avantageusement inférieure à celle de la partie cylindrique du panneau amovible du bras radial afin de pouvoir accéder à ce conduit et l'extraire si nécessaire de l'intérieur de la virole interne.

Ce conduit de fluide est par exemple un conduit de circulation d'air chaud dont une extrémité débouche dans un compresseur du turboréacteur pour le prélèvement d'air et dont l'autre extrémité est fixée sur la virole externe et est reliée à des moyens de circulation de fluide.

Le dispositif comprend également des moyens d'étanchéité tels que des joints serrés entre le panneau amovible et le bras radial et/ou entre le panneau amovible et la virole interne.

Ces joints d'étanchéité ont une bonne tenue thermique et permettent de limiter voire d'éviter la propagation d'un feu survenant à l'intérieur du moteur radialement vers l'extérieur dans le flux secondaire.

Dans un mode de réalisation de l'invention, le dispositif comprend deux bras radiaux diamétralement opposés par rapport à l'axe des viroles et comportant chacun un panneau amovible d'accès à un équipement situé à l'intérieur de la virole interne, cet équipement étant par exemple un vérin du type LRU de commande de redresseurs à calage variable.

L'invention concerne également un dispositif du type décrit ci-dessus, le panneau amovible étant caractérisé en ce qu'il est sensiblement en forme de L et comprend une plaque plane radiale raccordée à une plaque incurvée en arc de cercle, ce panneau comportant une série de trous de passage de boulons le long d'au moins un de ses bords longitudinaux et le long du bord d'extrémité de la plaque incurvée.

Ce panneau amovible est de préférence équipé de joints d'étanchéité le long des bords de ses plaques radiale et incurvée.

L'invention sera mieux comprise et d'autres détails, caractéristiques et avantages de la présente invention apparaîtront à la lecture de la description suivante faite à titre d'exemple non limitatif en référence aux dessins annexés dans lesquels :
- la figure 1 est une vue schématique en perspective d'un dispositif selon l'invention de support et de logement de servitudes dans un turboréacteur à double flux, vu de l'aval ;
- la figure 2 est une vue schématique partielle à plus grande échelle de ce dispositif et représente un bras radial équipé d'un panneau amovible ;
- la figure 3 est une autre vue schématique en perspective du bras radial de la figure 2, son panneau amovible ayant été retiré ;
- la figure 4 est une vue schématique partielle à plus grande échelle du dispositif de la figure 1 et représente un autre bras radial équipé d'un panneau amovible ;
- la figure 5 est une autre vue schématique en perspective du bras radial de la figure 4, son panneau amovible ayant été retiré.

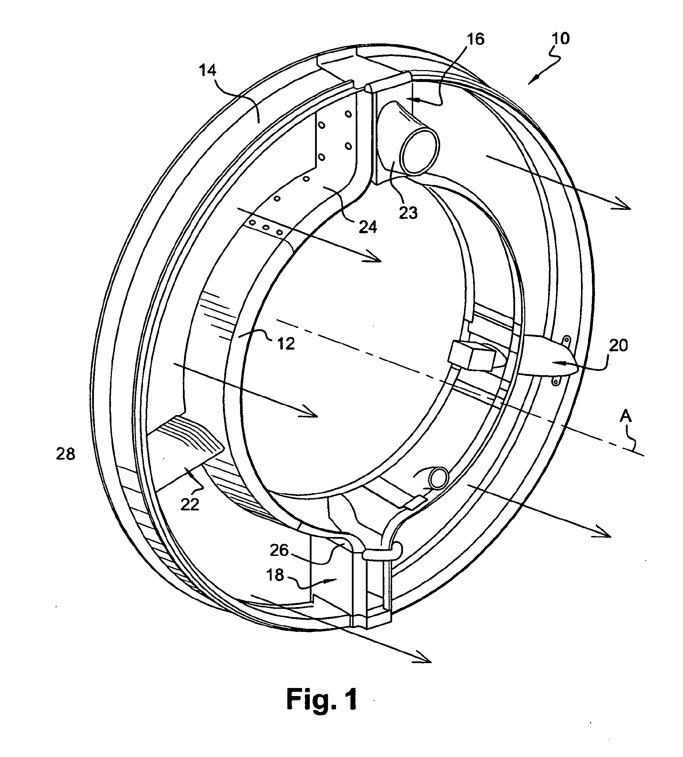

On a représenté en figure 1 un dispositif 10 selon l'invention de support et de logement de servitudes dans un turboréacteur à double flux, ce dispositif comprenant deux viroles cylindriques coaxiales 12, 14 qui s'étendent l'une autour de l'autre et qui sont reliées entre elles par des bras radiaux 16, 18, 20 et 22, certains de ces bras 16, 18 comportant un panneau latéral amovible 24, 26 permettant un accès à des équipements du turboréacteur situés à l'intérieur de la virole interne et au moins en partie dans l'alignement du bras radial, pour une opération de maintenance.

Ce dispositif est monté en aval de la soufflante du turboréacteur et la virole interne 12 entoure un carter externe du compresseur du turboréacteur, à distance de ce carter, et s'étend axialement dans l'alignement d'un autre carter du turboréacteur. La virole interne 12 délimite avec la virole externe 14 une veine annulaire d'écoulement du flux secondaire provenant de la soufflante qui est schématiquement représenté par des flèches.

La virole externe 14 comprend à ses extrémités amont et aval des rebords annulaires externes 28 d'attache par des moyens appropriés à un carter intermédiaire du turboréacteur et à un inverseur de poussée, respectivement. La virole externe 14 assure la transmission d'efforts entre le carter intermédiaire et l'inverseur de poussée, ce dernier étant par exemple du type à portes.

Les bras radiaux 16, 18, 20, 22 sont au nombre de quatre dans l'exemple représenté.

Deux de ces bras radiaux 16, 18 sont diamétralement opposés par rapport à l'axe A du dispositif et s'étendent sensiblement dans un plan vertical. Le bras supérieur 16 est appelé « bras 12h » et le bras inférieur 18 est appelé « bras 6h », par analogie avec le cadran d'une montre, et les deux autres bras radiaux 20, 22 sont situés de part et d'autre du bras inférieur 18, à environ 60° de celui-ci, et sont appelés « bras 4h » et « bras 8h ».

Ces bras 16, 18, 20, 22 sont tubulaires et sont ouverts à leurs extrémités interne et externe afin que des composants situés radialement à l'intérieur et à l'extérieur du dispositif puissent être raccordés à des conduits de fluide et des câbles électriques passant à l'intérieur des bras.

Par exemple, des câbles électriques passent à l'intérieur du bras 20, un conduit de carburant passe à l'intérieur du bras 22, un conduit d'huile passe à l'intérieur du bras 18 et un conduit d'air passe à l'intérieur du bras 16.

Un autre conduit d'air 23 comprend un embout monté sur une partie aval du bras supérieur 16 et s'étendant sensiblement parallèlement à l'axe A du dispositif. Ce conduit est raccordé en amont à des moyens de prélèvement d'air dans le flux secondaire et en aval à des moyens appropriés de circulation d'air pour le refroidissement de composants du turboréacteur et l'alimentation en air de la cabine de pilotage de l'avion équipé de ce turboréacteur.

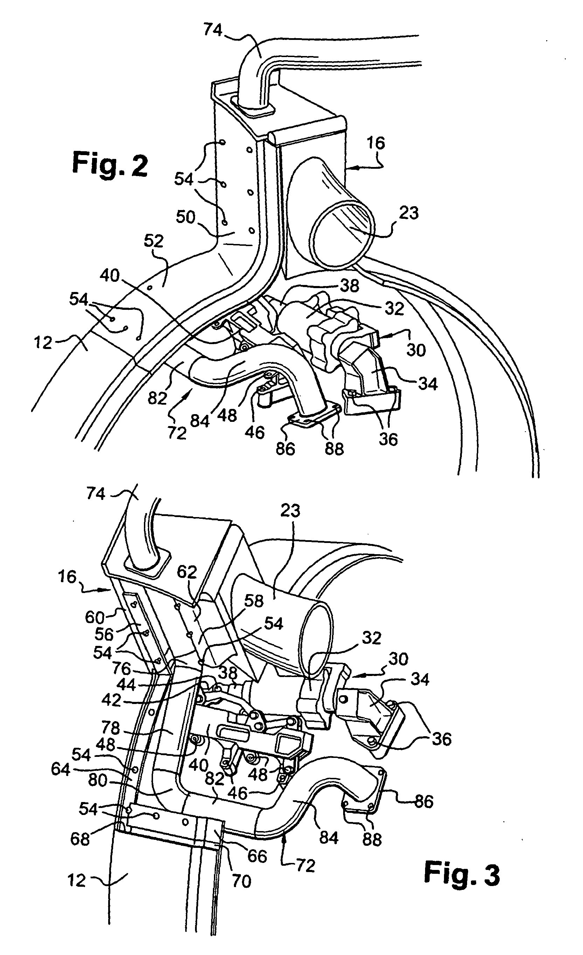

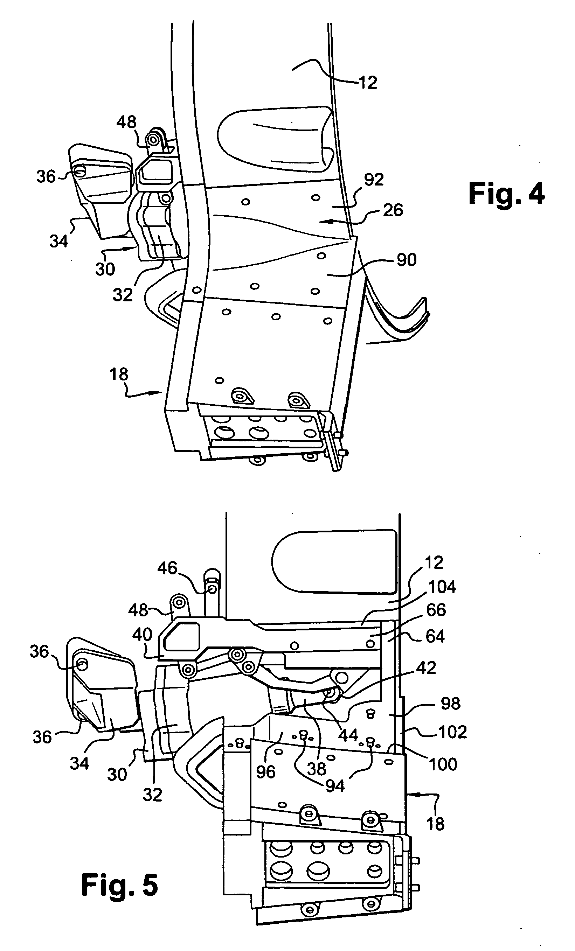

Dans l'exemple représenté aux figures 2 à 5, les bras radiaux supérieur 16 et inférieur 18 comportent chacun un panneau latéral 24, 26 démontable et autorisant l'accès à des composants qui sont montés sur le carter (non représenté) du compresseur et qui se trouve dans l'alignement du bras radial.

Le panneau amovible 24 du bras 16 est sensiblement en forme de L et comprend une plaque plane 50 destinée à s'étendre radialement sur le côté du bras 16 pour le fermer, et raccordée à son extrémité interne à une plaque 52 incurvée en arc de cercle qui forme une partie de la virole interne 12 adjacente au bras.

La plaque 50 est posée et fixée au moyen de vis 54 le long de ses bords amont et aval sur des rebords radiaux 56, 58 correspondants qui s'étendent le long des bords latéraux amont 60 et aval 62 du bras 16, respectivement (figure 3).

La plaque 52 est posée et fixée au moyen de vis 54 le long de son bord amont et son extrémité latérale opposée au bras 16, respectivement sur un rebord circonférentiel 64 qui s'étend le long de l'extrémité amont de la virole 12 et sur un rebord axial 66 qui s'étend d'amont en aval sur la virole. Le rebord circonférentiel 64 de support de la plaque 52 relie le rebord axial 66 au rebord radial amont 56 du bras 16.

Le rebord axial 66 de la virole 12 comprend sur sa surface externe une rainure axiale 70 dans laquelle est logée un joint d'étanchéité (non représenté). Ce joint est destiné à être serré entre le rebord 60 de la virole et la plaque 24 afin d'éviter d'une part le passage d'air du flux secondaire radialement à l'intérieur de la virole interne et d'autre part la propagation d'un éventuel feu survenant dans le turboréacteur radialement vers l'extérieur dans le flux secondaire.

Le panneau amovible 26 du bras 18 est également en forme de L et sa taille est inférieure à celle du panneau 24.

Le panneau 26 comprend une plaque plane 90 qui s'étend radialement sur le côté du bras 18 sensiblement à mi-hauteur de celui-ci et qui est raccordée à une plaque 92 incurvée en arc de cercle qui s'étend sur la virole interne 12.

La plaque 90 est posée et fixée par des vis 94 le long de son bord radialement externe et de son bord amont sur des rebords 96, 98 correspondants du bras, respectivement. Le rebord 96 s'étend axialement d'amont en aval le long du bord latéral radialement interne 100 du bras, et le rebord 98 s'étend radialement le long du bord latéral amont 102 du bras. La plaque 92 est posée et fixée sur des rebords 64, 66 de la virole, comme précédemment décrit pour la plaque 52 en référence à la figure 3.

Un joint d'étanchéité (non représenté) est logé dans une rainure axiale 104 du rebord 66 de la virole et serré entre ce rebord 66 et la plaque 26. Des joints d'étanchéité peuvent également être prévus dans des rainures du rebord axial 96 du bras et du rebord circonférentiel 64 de la virole 12.

Dans l'exemple représenté, la dépose des panneaux 24, 26 des bras 16, 18 permet d'effectuer des opérations de maintenance sur des vérins 30 et un conduit de fluide 72 qui sont montés sur le carter du compresseur dans l'alignement ou à proximité des bras 16, 18.

Les vérins 30 s'étendent vers l'amont sensiblement parallèlement à l'axe A du dispositif. Le corps 32 de chaque vérin est porté par une patte 34 fixée au moyen de vis 36 ou analogues sur le carter du compresseur.

La tige de piston 38 de chaque vérin est reliée à un mécanisme 40 de calage angulaire de redresseurs du compresseur, par une biellette 42 dont une extrémité est solidaire en rotation du mécanisme 40 et dont l'autre extrémité est articulée sur la tige de piston 36 par un système du type vis-écrou 44 ou analogue.

Le mécanisme 40 est fixé sur le carter par des vis 46 et relié par des moyens 48 appropriés à des anneaux de commande (non représentés) qui entourent le carter du compresseur et qui sont déplaçables en rotation autour de l'axe du turboréacteur pour entraîner en rotation les redresseurs du compresseur autour de leurs axes.

La dépose des panneaux 24, 26 permet d'avoir accès aux vis de fixation des vérins qui sont dans l'alignement des bras radiaux.

Un conduit d'air 72 passe à l'intérieur du bras 16 et comprend une extrémité radialement interne fixée sur le carter du compresseur et débouchant dans le compresseur pour le prélèvement d'air chaud, et une extrémité radialement externe fixée sur la virole externe 14 et raccordée à un autre conduit 74 d'amenée d'air par exemple à la nacelle du turboréacteur en vue de son dégivrage.

Le conduit 72 s'étend radialement depuis son extrémité externe fixée sur la virole externe 14 jusqu'à un coude 76 de raccord à une partie circonférentielle 78 du conduit qui s'étend à l'intérieur de la virole interne 12 le long et à proximité du rebord circonférentiel 64 de la virole 12.

L'extrémité de la partie 78 du conduit opposée au bras 16 est raccordée par un autre coude 80 à une partie axiale 82 du conduit qui s'étend vers l'aval et qui est raccordée à son extrémité aval à un coude 84 qui comporte à son extrémité libre une bride 86 de fixation au moyen de vis 88 sur le carter du compresseur.

La dépose du panneau amovible 24 permet également d'avoir accès aux vis 86 de fixation du conduit 72 pour son démontage. Pour cela, la dimension circonférentielle de la plaque incurvée 52 du panneau 24 est supérieure à celle de la partie 78 du conduit 72 pour faciliter l'extraction du conduit.

## Revendications

1. Dispositif de support et de logement de servitudes dans un turboréacteur à double flux, comprenant deux viroles coaxiales (12, 14) disposées l'une à l'intérieur de l'autre et reliées par des bras radiaux tubulaires (16, 18, 20, 22) dans lesquels passent des conduits de fluide (72) et des câbles électriques, **caractérisé en ce qu'**une face latérale d'au moins un bras radial (16, 18) comprend un panneau amovible (24, 26) comportant une partie radiale fixée sur le bras radial (16, 18) et une partie cylindrique de raccordement à la virole interne (12).

2. Dispositif selon la revendication 1, **caractérisé en ce que** la partie radiale du panneau amovible (24, 26) est posée et fixée le long d'au moins certains de ses bords sur des rebords (56, 58, 96, 98) correspondants du bras radial (16, 18) et la partie cylindrique du panneau amovible (24, 26) est posée et fixée le long d'au moins certains de ses bords sur des rebords (64, 66) correspondants de la virole interne (12).

3. Dispositif selon l'une des revendications précédentes, **caractérisé en ce qu'**il comprend des moyens d'étanchéité tels que des joints serrés entre le panneau amovible (24, 26) et le bras radial (16, 18) et/ou entre le panneau amovible (24, 26) et la virole interne (12).

4. Dispositif selon l'une des revendications précédentes, **caractérisé en ce qu'**un conduit de fluide (72) s'étend sensiblement radialement dans le bras radial (16) le long du panneau amovible (24) et sensiblement circonférentiellement à l'intérieur de la virole interne (12), la dimension circonférentielle de la partie circonférentielle (78) de ce conduit (72) étant inférieure à la dimension circonférentielle de la partie cylindrique du panneau amovible (24).

5. Dispositif selon la revendication 4, **caractérisé en ce que** le conduit de fluide (72) est un conduit de circulation d'air chaud dont une extrémité débouche dans un compresseur du turboréacteur pour le prélèvement d'air et dont l'autre extrémité est fixée sur la virole externe (14) et est reliée à moyens de circulation de fluide.

6. Dispositif selon l'une des revendications précédentes, **caractérisé en ce qu'**il comprend deux bras radiaux (16, 18) diamétralement opposés par rapport à l'axe (A) des viroles (12, 14) et comportant chacun un panneau amovible d'accès à un équipement (30) situé à l'intérieur de la virole interne (12).

7. Dispositif selon l'une des revendications précédentes, **caractérisé en ce que** l'équipement accessible par dépose du panneau amovible (24, 26) est un vérin (30) de commande de redresseurs à calage variable.

8. Dispositif selon l'une des revendications précédentes, **caractérisé en ce que** le panneau amovible (24, 26) est sensiblement en forme de L et comprend une plaque plane radiale (50, 90) raccordée à une plaque incurvée (52, 92) en arc de cercle, ce panneau (24, 26) comportant une série de trous de passage de vis le long d'au moins un de ses bords longitudinaux et le long du bord d'extrémité de la plaque incurvée.

9. Dispositif selon la revendication 8, **caractérisé en ce que** le panneau amovible (24, 26) comporte des joints d'étanchéité le long des bords de ses plaques radiale (50, 90) et incurvée (52, 92).

## Claims

1. Device for supporting and housing auxiliaries in a bypass turbojet, comprising two coaxial case rings (12, 14) arranged one inside the other and connected by tubular radial arms (16, 18, 20, 22) through which fluid ducts (72) and electric cables pass, **characterized in that** a lateral face of at least one radial arm (16, 18) comprises a detachable panel (24, 26) comprising a radial portion fastened to the radial arm (16, 18) and a cylindrical portion for connection to the internal case ring (12).

2. The device according to Claim 2, **characterized in that** the radial portion of the detachable panel (24, 26) is placed and fastened, along at least some of its edges, on corresponding rims (56, 58, 96, 98) of the radial arm (16, 18), and the cylindrical portion of the detachable panel (24, 26) is placed and fastened, along at least some of its edges, on corresponding rims (64, 66) of the internal case ring (12).

3. Device according to one of the preceding claims, **characterized in that** it comprises sealing means such as gaskets clamped between the detachable panel (24, 26) and the radial arm (16, 18) and/or between the detachable panel (24, 26) and the internal case ring (12).

4. Device according to one of the preceding claims, **characterized in that** a fluid duct (72) extends substantially radially in the radial arm (16) along the detachable panel (24) and substantially circumferentially inside the internal case ring (12), the circumferential dimension of the circumferential portion (78) of this duct (72) being smaller than the circumferential dimension of the cylindrical portion of the detachable panel (24).

5. Device according to Claim 4, **characterized in that** the fluid duct (72) is a hot air circulation duct of which one end opens into a compressor of the turbojet for bleeding air and of which the other end is fastened to the external case ring (14) and is connected to fluid circulation means.

6. Device according to one of the preceding claims, **characterized in that** it comprises two radial arms (16, 18) diametrically opposed with respect to the axis (A) of the case rings (12, 14), each comprising a detachable panel for access to an equipment item (30) situated inside the internal case ring (12).

7. Device according to one of the preceding claims, **characterized in that** the equipment item accessible by removal of the detachable panel (24, 26) is an actuator (30) for controlling variable-setting stators.

8. Device according to one of the preceding claims, **characterized in that** the detachable panel (24, 26) is substantially L-shaped and comprises a radial flat plate (50, 90) connected to a plate (52, 92) curved in a circular arc, this panel (24, 26) having a series of screw fitting holes along at least one of its longitudinal edges and along the terminating edge of the curved plate.

9. Device according to Claim 8, **characterized in that** the detachable panel (24, 26) comprises sealing gaskets along the edges of its radial (50, 90) and curved (52, 92) plates.

## Patentansprüche

1. Vorrichtung zum Stützen und Aufnehmen von Hilfsgeräten in einem Zweikreisstrahltriebwerk mit zwei koaxialen Zwingen (12, 14), die in einander angeordnet und durch radiale rohrförmige Arme (16, 18, 20, 22) verbunden sind, in denen Fluidleitungen (72) und Stromkabel verlaufen, **dadurch gekennzeichnet, daß** eine Seitenfläche wenigstens eines radialen Arms (16, 18) ein abnehmbares Feld (24, 26) mit einem radialen Teil, der an dem radialen Arm (16, 18) befestigt ist, und einem zylindrischen Teil zum Anschluß an die innere Zwinge (12) aufweist.

2. Vorrichtung nach Anspruch 1, **dadurch gekennzeichnet, daß** der radiale Teil des abnehmbaren Feldes (24, 26) entlang wenigstens bestimmter seiner Ränder an entsprechende Kanten (56, 58, 96, 98) des radialen Arms (16, 18) gesetzt und dort befestigt ist und der zylindrische Teil des abnehmbaren Feldes (24, 26) entlang wenigstens bestimmter seiner Ränder an entsprechende Kanten (64, 66) des radialen Arms (16, 18) gesetzt und dort befestigt ist.

3. Vorrichtung nach einem der vorhergehenden Ansprüche, **dadurch gekennzeichnet, daß** sie Dichtungsmittel wie Dichtungen aufweist, die zwischen das abnehmbare Feld (24, 26) und den radialen Arm (16, 18) und/oder zwischen das abnehmbare Feld (24, 26) und die innere Zwinge (12) eingeklemmt sind.

4. Vorrichtung nach einem der vorhergehenden Anspruche, **dadurch gekennzeichnet, daß** sich eine Fluidleitung (72) im wesentlichen radial in dem radialen Arm (16) entlang des abnehmbaren Feldes (24) und im wesentlichen umfangsmäßig im Inneren der inneren Zwinge (12) erstreckt, wobei die Umfangsabmessung des Umfangsteils (78) dieser Leitung (72) kleiner als die Umfangsabmessung des zylindrischen Teils des abnehmbaren Feldes (24) ist.

5. Vorrichtung nach Anspruch 4, **dadurch gekennzeichnet, daß** die Fluidleitung (72) eine Heißluftzirkulationsleitung ist, von welcher ein Ende in einen Verdichter des Strahltriebwerks für die Entnahme von Luft mündet und von welcher das andere Ende an der äußeren Zwinge (14) befestigt und mit Fluidzirkulationsmitteln verbunden ist.

6. Vorrichtung nach einem der vorhergehenden Ansprüche, **dadurch gekennzeichnet, daß** sie zwei bezüglich der Achse (A) der Zwingen (12, 14) diametral entgegengesetzte radiale Arme (16, 18) aufweist, die jeweils ein abnehmbares Feld zum Zugang zu einem Gerät (30) aufweisen, das im Inneren der inneren Zwinge (12) liegt.

7. Vorrichtung nach einem der vorhergehenden Ansprüche, **dadurch gekennzeichnet, daß** das durch Abbau des abnehmbaren Feldes (24, 26) zugängliche Gerät ein Zylinder (30) zum Steuern von Leitapparaten mit variabler Einstellung ist.

8. Vorrichtung nach einem der vorhergehenden Ansprüche, **dadurch gekennzeichnet, daß** das abnehmbare Feld (24, 26) im wesentlichen L-förmig ist und eine radiale ebene Platte (50, 90) aufweist, die an eine kreisbogenförmig gekrümmte Platte (52, 92) angeschlossen ist, wobei dieses Feld (24, 26) eine Reihe von Löchern zum Durchgang von Schrauben entlang wenigstens eines ihrer Längsränder und entlang des Endrandes der gekrümmten Platte aufweist.

9. Vorrichtung nach Anspruch 8, **dadurch gekennzeichnet, daß** das abnehmbare Feld (24, 26) Dichtungen entlang der Ränder seiner radialen (50, 90) und gekrümmten (52, 92) Platte aufweist.
